# EUROPEAN PATENT APPLICATION

(11) **EP 4 792 966 A1**
(43) Date of publication of application: **19.08.2026**
(21) Application number: 26154206.2
(22) Date of filing: 26.01.2026
(51) Int. Cl.: B23K 9/10, B23K 9/32

(54) **WELDING-TYPE POWER SUPPLIES WITH NOISE MANAGEMENT CAPABILITIES**

(30) Priority: 05.02.2025 US 202563754097 P; 20.01.2026 US 202619453471
(71) Applicant: Illinois Tool Works Inc., Glenview IL 60025 (US)
(72) Inventor: TRINKNER, Michael John, Glenview, 60025 (US)
(74) Representative: HGF

(57) **Abstract**

Disclosed herein are welding-type power supplies with noise management capabilities. In some examples, the noise management capabilities include the ability to estimate an amount and/or level of audible noise that is currently being made (or that will be made) by the power supply (and/or by a particular device of the power supply). In some examples, the noise management capabilities additionally include the ability to regulate the power supply (and/or a particular device of the power supply) so that the generated noise stays below a set threshold. These noise management capabilities may be helpful if, for example, the welding-type power supply operates in a noise sensitive area (e.g., near a hospital, school, etc.), and/or if there are labor standards and/or local government regulations that prohibit/regulate noise levels above a given threshold.

## Description

### CROSS REFERENCE TO RELATED APPLICATIONS

This application claims priority to, and the benefit of, U.S. Provisional Patent Application No. 63/754,097, entitled "WELDING-TYPE POWER SUPPLIES WITH NOISE MANAGEMENT CAPABILITIES," filed February 5, 2025, the entire contents of which are hereby incorporated by reference.

### TECHNICAL FIELD

The present disclosure generally relates to welding-type power supplies, and, more particularly, to welding-type power supplies with noise management capabilities.

### BACKGROUND

Welding power supplies supply power to welding tools for use during arc welding operations. Some welding power supplies use mains power. Some power supplies use engines to generate power.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to welding-type power supplies with noise management capabilities, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG 1. shows an example of a welding-type system, in accordance with aspects of this disclosure.
FIG. 2 is a block diagram showing an example of a welding-type power supply that might be used in the welding-type system of FIG. 1, in accordance with aspects of this disclosure.
FIG. 3 is a flowchart showing example operation of a noise management process of the welding-type power supply of FIG. 2, in accordance with aspects of this disclosure.
FIGS. 4a-4c show example outputs of a user interface of the welding-type power supply of FIG. 2, such as might occur during the noise management process of FIG. 3, in accordance with aspects of this disclosure.

The figures are not necessarily to scale. Where appropriate, the same or similar reference numerals are used in the figures to refer to similar or identical elements. For example, reference numerals utilizing lettering (e.g., first welding-type power supply 200a, second welding-type power supply 200b) refer to instances of the same reference numeral that does not have the lettering (e.g., welding-type power supply 200).

### DETAILED DESCRIPTION

Some examples of the present disclosure relate to welding-type power supplies with noise management capabilities. In some examples, the noise management capabilities include the ability to estimate an amount and/or level of audible noise that is currently being made by the power supply (and/or by a particular device of the power supply). For example, if the power supply has an engine (e.g., a diesel engine, a gasoline engine, etc.), or another device that generates significant audible noise (e.g., a hydraulic pump, an air compressor, etc.), the power supply may be able to estimate the amount of audible noise each and/or all of the devices are currently making, and report this to the operator.

In some examples, the noise management capabilities additionally include the ability to estimate the amount of audible noise that will be made in the future by the power supply (and/or a particular device of the power supply). In some examples, the noise management capabilities additionally include the ability to regulate the power supply (and/or a particular device of the power supply) so that the generated noise stays below a set threshold. These noise management capabilities may be helpful if, for example, the welding-type power supply operates in a noise sensitive area (e.g., near a hospital, school, etc.), and/or if there are labor standards and/or local government regulations that prohibit or otherwise regulate noise levels above a given threshold.

Some examples of the present disclosure relate to a welding-type power supply, comprising: power conversion circuitry configured to convert input power to welding-type output power suitable for use by a welding-type tool during a welding-type operation; a noise generating device; control circuitry configured to estimate a noise level of the welding-type power supply or the noise generating device; and a user interface configured to output an indication of the noise level.

In some examples, the noise generating device comprises an engine-generator, a hydraulic pump, or an air compressor. In some examples, the control circuitry is configured to estimate the noise level based on sound sensor data captured by a sound sensor, the sound sensor data relating to an audible noise of the welding-type power supply or the noise generating device. In some examples, the noise generating device is configured to produce an output, and the control circuitry is configured to estimate the noise level based on an amount of the output of the noise generating device.

In some examples, the welding-type power supply further comprises memory circuitry storing one or more associations between a plurality of output amounts and one or more different noise levels, the control circuitry being configured to estimate the noise level based on the one or more associations and the amount of the output of the noise generating device. In some examples, the control circuitry is further configured to: identify a noise threshold, determine whether the noise level exceeds the noise threshold, and in response to determining the noise level exceeds the noise threshold: output a notification via the user interface, control the noise generating device to reduce an output of the noise generating device, or disable the welding-type power supply. In some examples, the control circuitry is further configured to: identify a noise threshold, identify an output demand, estimate a future noise level that will be produced by the welding-type power supply based on the output demand, determine whether the future noise level exceeds the noise threshold, and in response to determining the future engine noise level exceeds the noise threshold, output a notification, or recommend a different power supply setting, via the user interface.

Some examples of the present disclosure relate to a welding-type power supply, comprising: power conversion circuitry configured to convert input power to welding-type output power suitable for use by a welding-type tool during a welding-type operation; a noise generating device configured to produce an output, the noise generating device comprising an engine-generator, a hydraulic pump, or an air compressor; control circuitry configured to estimate a noise level of the welding-type power supply or the noise generating device based on sound sensor data captured by a sound sensor, or an amount of the output of the noise generating device; and a user interface configured to output an indication of the noise level.

In some examples, the output comprises mechanical engine power, electrical generator power, hydraulic fluid flow, or compressed air. In some examples, the welding-type power supply further comprises memory circuitry storing one or more associations between a plurality of output amounts and one or more different noise levels, the control circuitry being configured to estimate the noise level based on the one or more associations and the amount of the output of the noise generating device. In some examples, the control circuitry is further configured to: identify a noise threshold, determine whether the noise level exceeds the noise threshold, and in response to determining the noise level exceeds the noise threshold: output a notification via the user interface, control the noise generating device to reduce the output, or disable the welding-type power supply.

In some examples, the control circuitry is further configured to: identify a noise threshold, identify an output demand based on a power supply setting, estimate a future noise level that will be produced by the welding-type power supply based on the output demand, determine whether the future noise level exceeds the noise threshold, and in response to determining the future noise level exceeds the noise threshold, output a notification, or recommend a different power supply setting, via the user interface.

In some examples, the noise generating device comprises the engine-generator, and the output comprises a mechanical engine power or an electrical generator power, the engine-generator comprising an engine configured to output the mechanical engine power, and a generator configured to produce the electrical generator power from the mechanical engine power, the user interface being further configured to receive a noise setting, and the control circuitry being further configured to: identify the noise threshold based on the noise setting, estimate a power threshold based on the noise threshold, control the engine such that the mechanical engine power output by the engine remains below the power threshold, or the electrical generator power produced by the generator remains below the power threshold, and use at least some of the electrical generator power produced by the generator to replenish electrical energy stored by an internal energy storage device of the welding-type power supply, or an external storage device that is electrically connected to the welding-type power supply.

In some examples, the noise generating device comprises the engine-generator, and the output comprises a mechanical engine power or an electrical generator power, the engine-generator comprising an engine configured to output the mechanical engine power, and a generator configured to produce the electrical generator power from the mechanical engine power, the welding-type power supply further comprising an energy storage device configured to store electrical energy, and the control circuitry being further configured to: identify a noise threshold, estimate a power threshold based on the noise threshold, control the engine such that the mechanical engine power output by the engine remains below the power threshold, or the electrical generator power produced by the generator remains below the power threshold, identify a power demand, control the power conversion circuitry to use the electrical generator power produced by the generator as a first portion of the input power to meet a portion of the power demand, and control the power conversion circuitry to use the electrical energy stored by the energy storage device as a second portion of the input power to meet a remaining portion of the power demand.

Some examples of the present disclosure relate to a welding-type power supply, comprising: an engine configured to output mechanical power; a generator configured to produce electrical power from the mechanical power output by the engine; power conversion circuitry configured to convert input power to welding-type output power suitable for use by a welding-type tool during a welding-type operation, the power conversion circuitry being configured to use the electrical power produced by the generator as the input power; control circuitry configured to estimate a noise level of the welding-type power supply or the noise generating device based on sound sensor data captured by a sound sensor, a first amount of the mechanical power output by the engine, or a second amount of the electrical power produced by the generator; and a user interface configured to output an indication of the noise level.

In some examples, the welding-type power supply further comprises a hydraulic pump, or an air compressor, the control circuitry being configured to estimate the noise level based on (i) the first amount of the mechanical power output by the engine, or a second amount of the electrical power produced by the generator, and (ii) a third amount of hydraulic fluid output by the hydraulic pump, or a fourth amount of compressed air output by the air compressor. In some examples, the welding-type power supply further comprises memory circuitry storing one or more associations between a plurality of output amounts and one or more different noise levels, the control circuitry being configured to estimate the noise level based on (i) the one or more associations and (ii) the first amount of the mechanical power output by the engine, or the second amount of the electrical power produced by the generator.

In some examples, the control circuitry is further configured to: identify a noise threshold, determine whether the noise level exceeds the noise threshold, and in response to determining the noise level exceeds the noise threshold: output a notification via the user interface, control the engine to reduce the mechanical power output by the engine, or disable the welding-type power supply. In some examples, the control circuitry is further configured to: identify a noise threshold, identify a power demand based on a power supply setting, estimate a future noise level that will be produced by the welding-type power supply based on the power demand, determine whether the future noise level exceeds the noise threshold, and in response to determining the future noise level exceeds the noise threshold, output a notification, or recommend a different power supply setting, via the user interface.

In some examples, the welding-type power supply further comprises an energy storage device configured to store electrical energy, the control circuitry being further configured to: identify a noise threshold, estimate a power threshold based on the noise threshold, control the engine such that the mechanical power output by the engine remains below the power threshold, or the electrical power produced by the generator remains below the power threshold, identify a power demand, control the power conversion circuitry to use the electrical power produced by the generator as a first portion of the input power to meet a portion of the power demand, and control the power conversion circuitry to use the electrical energy stored by the energy storage device as a second portion of the input power to meet a remaining portion of the power demand.

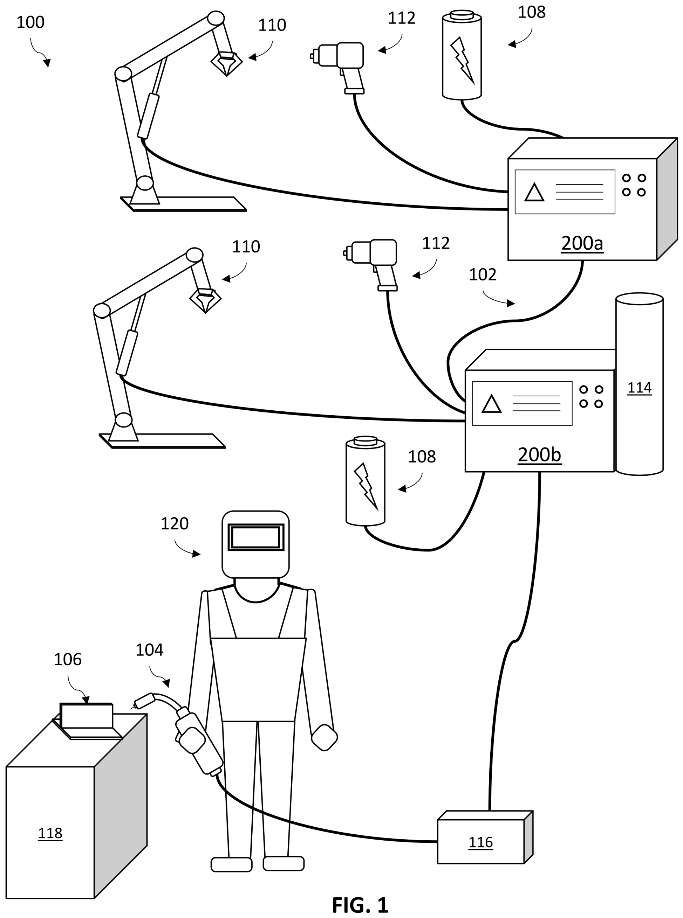

FIG. 1 shows an example of a welding-type system 100. As shown, the welding-type system 100 includes a first welding-type power supply 200a and a second welding-type power supply 200b connected via a power supply cable 102. In some examples, the first welding-type power supply 200a supplies electrical input power to the second welding-type power supply via the power supply cable 102. In some examples, the first welding-type power supply 200a may be omitted, and/or the second welding-type power supply 200b may use an internal device to generate electrical input power.

In some examples, the second welding-type power supply 200b uses the electrical input power from the first welding-type power supply 200a and/or second welding-type power supply 200b to generate electrical welding-type output power. In some examples, the welding-type output power is used to power a welding-type tool 104 during performance of welding-type operations on a workpiece 106 (e.g., in response to a trigger, or other activation, signal received from the welding-type tool 104).

While depicted in FIG. 1 as a welding torch or gun configured for gas metal arc welding (GMAW), in some examples, the welding-type tool 104 may instead be a different welding-type tool 104. For example, the welding-type tool 104 may be an electrode holder (i.e., stinger) configured for shielded metal arc welding (SMAW), a torch and/or filler rod configured for gas tungsten arc welding (GTAW), a welding gun configured for flux-cored arc welding (FCAW), and/or a plasma cutter.

In some examples, the second welding-type power supply 200b additionally, or alternatively, uses the electrical input power from the first welding-type power supply 200a and/or second welding-type power supply 200b to generate electrical auxiliary output power. In some examples, the auxiliary output power may be provided to and/or used to power one or more auxiliary devices 108 (e.g., an external battery, a smartphone, a light, etc.). In the example of FIG. 1, both welding-type power supplies 200 are shown as being (e.g., electrically) connected to an auxiliary device 108. Additionally, in some examples, it is electrical auxiliary output power from the first welding-type power supply 200a that is delivered to the second welding-type power supply 200b via the power supply cable 102 to be used as electrical input power by the second welding-type power supply 200b.

While the second welding-type power supply 200b is only shown as being attached to one auxiliary device 108 in the example of FIG. 1, in some examples, the second welding-type power supply 200b may be attached to several auxiliary devices 108. Indeed, in some examples, the first welding-type power supply 200a may be considered to be attached to several auxiliary devices 108 due to its connection to the auxiliary device 108 and the second welding-type power supply 200b (to which it delivers electrical auxiliary output power).

In some examples, the first welding-type power supply 200a and/or second welding-type power supply 200b also output and/or generate other forms of (e.g., non-electrical) power. For example, the first welding-type power supply 200a and/or second welding-type power supply 200b may output hydraulic fluid that may be used to power hydraulic devices 100, such as, for example, the hydraulic device 100 (e.g., a hydraulic crane) shown attached to the power supplies 200 in FIG. 1. As another example, the first welding-type power supply 200a and/or second welding-type power supply 200b may output compressed air that may be used to power pneumatic devices 112, such as, for example, the pneumatic device 112 (e.g., a pneumatic wrench) shown attached to the power supplies 200 in FIG. 1.

Though each welding-type power supply 200 is only shown as being connected to one hydraulic device 110 and one pneumatic device 112 in the example of FIG. 1, in some examples, one or more of the welding-type power supplies 200 may be connected to two or more hydraulic devices 110 and/or pneumatic devices 112. In some examples, one or more of the auxiliary devices 108, hydraulic devices 110, and/or pneumatic devices 112 may be omitted from the welding-type system 100.

In the example of FIG. 1, the second welding-type power supply 200b is shown as being connected to a gas supply tank114 and a welding wire feeder 116. In some examples, the gas supply tank 114 provides shielding and/or other gas to the welding-type tool 104 through the welding-type power supply 200 (and/or welding wire feeder 116). In some examples, the welding wire feeder 116 includes a wire spool and one or more motorized rollers that feed welding wire from wire spool to the welding-type tool 104.

In some examples, the welding wire feeder 116 additionally routes welding-type power (e.g., from the second welding-type power supply 200b) and/or gas (e.g., from the gas supply tank 114 and/or second welding-type power supply) to the welding-type tool 104. In some examples, the welding-type tool 104 uses the welding wire, shielding gas, and/or welding-type power to perform welding-type operations.

Though not shown for the sake of simplicity, in some examples, the welding-type wire feeder 116 is also (e.g., electrically) connected with a welding bench 118 upon which the workpiece 106 sits, and/or with the workpiece 106 itself. In some examples, the welding wire feeder 116 is omitted (or integrated into the second welding-type power supply 200b), and the second welding-type power supply 200b routes shielding gas and/or welding-type power directly to the welding-type tool 104, and/or is (e.g., electrically) connected with the welding bench 118 and/or workpiece 106.

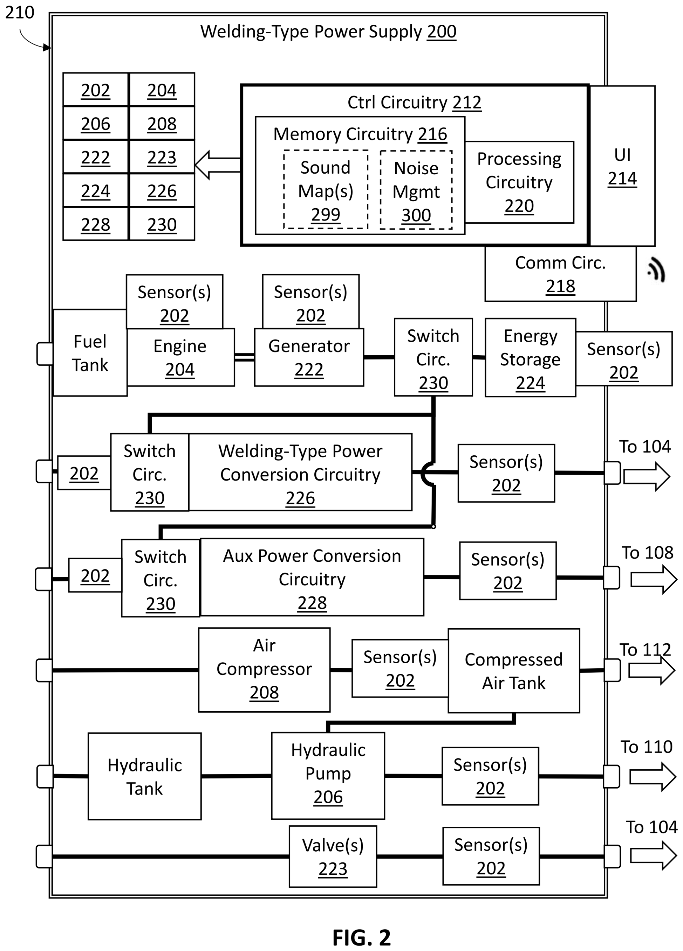

In some examples, the first welding-type power supply 200a is omitted, and/or the second welding-type power supply 200b instead generates its own input power via an engine 204 and generator 222 (see FIG. 2). In some examples, the second welding-type power supply 200b further includes a hydraulic pump 206 and/or air compressor 208 (see, e.g., FIG. 2) to provide hydraulic fluid and/or compressed air to the hydraulic device(s) 110 and/or pneumatic device(s) 112.

In some examples, the engine 204, hydraulic pump 206, and/or air compressor 208 generate a substantial amount of audible noise when operating. In some examples, the welding-type power supply 200 may also include other devices that generate a substantial amount of noise when operating. This can be an issue if, for example, the welding-type power supply 200 is operating in a noise sensitive area (e.g., near a hospital, school, etc.), and/or if there are labor standards or local government regulations that prohibit or otherwise regulate noise levels above a given limit.

This disclosure therefore contemplates welding-type power supplies 200 with noise management capabilities. In some examples, the noise management capabilities include the ability to estimate an amount and/or level of audible noise that is currently being made by the power supply 200 (and/or an engine 204, hydraulic pump 206, air compressor 208, and/or other noise generating device of the power supply 200). In some examples, the noise management capabilities additionally, or alternatively, include the ability to estimate the amount of audible noise that will be made in the future by the power supply 200 (and/or an engine 204, hydraulic pump 206, air compressor 208, and/or other noise generating device of the power supply 200). In some examples, the noise management capabilities additionally, or alternatively, include the ability to regulate (e.g., an output of) the power supply 200 (and/or an engine 204, hydraulic pump 206, air compressor 208, and/or other noise generating device of the power supply 200) so that the generated noise stays below a set threshold.

FIG. 2 is a block diagram showing example components of a welding-type power supply 200 with noise management capabilities. In some examples, the welding-type power supply 200 shown in FIG. 2 may be used to implement the first welding-type power supply 200a and/or second welding-type power supply 200b of FIG. 2.

In the example of FIG. 2, the welding-type power supply 200 includes several sensors 202 that might be used to estimate an amount and/or level of noise currently generated by the welding-type power supply 200 (and/or an engine 204, hydraulic pump 206, air compressor 208, and/or other noise generating device of the power supply 200). As shown, some of the sensors 202 are enclosed within a housing 210 of the welding-type power supply 200, while others extend outside the housing 210. In some examples, one or more external sensors may also be used.

In some examples, one or more of the sensors 202 are sound/audio/acoustic sensors (e.g., comprising one or more microphones, piezoelectric devices, and/or accompanying circuitry). In some examples, one or more of the sensors 202 are temperature sensors, fluid flow sensors, fluid volume sensors, electrical current sensors, electrical voltage sensors, electrical impedance sensors, accelerometers, magnetometers, rotary sensors, pressure sensors, and/or other sensors. In some examples, the (e.g., sound) sensors 202 are configured to detect noise and/or sound (and/or capture sensor data relating to noise/sound) generated by the welding-type power supply 200 in general.

In some examples, one or more (e.g., sound) sensors 202 (e.g., positioned proximate the engine 204) detect noise and/or sound (and/or capture sensor data relating to noise/sound) generated by the engine 204 in particular. In some examples, one or more (e.g., sound) sensors 202 (e.g., positioned proximate the air compressor 208) detect noise and/or sound (and/or capture sensor data relating to noise/sound) generated by the air compressor 208 in particular. In some examples, one or more (e.g., sound) sensors 202 (e.g., positioned proximate the hydraulic pump 206) detect noise and/or sound (and/or capture sensor data relating to noise/sound) generated by the hydraulic pump 206 in particular.

In the example of FIG. 2, control circuitry 212 of the welding-type power supply 200 is electrically connected to, and/or in electrical communication with, the sensors 202. In some examples, sensor data captured by the sensors 202 is received and/or evaluated by the control circuitry 212.

In some examples, the control circuitry 212 uses (e.g., sound) sensor data captured by one or more (e.g., sound) sensors 202 to estimate a current amount/level of audible noise produced by the welding-type power supply 200 in general, and/or the engine 204, air compressor 208, hydraulic pump 206, and/or other noise generating device(s) in particular. In some examples, the control circuitry 212 sums the individual noise estimates to determine an overall noise level estimate. In some examples, the control circuitry 212 is configured to output the estimated current noise level via a user interface (UI) 214 of the welding-type power supply 200.

In some examples, the UI 214 includes one or more input devices and/or output devices. Examples of input devices include touch screens, keyboards, microphones, buttons, knobs, levers, switches, dials, slides, and/or other input devices. Examples of output devices include display screens, speakers, lights, haptic devices, and/or other output devices. In some examples, one or more of the output devices of the UI 214 may be used to output the estimated current noise level.

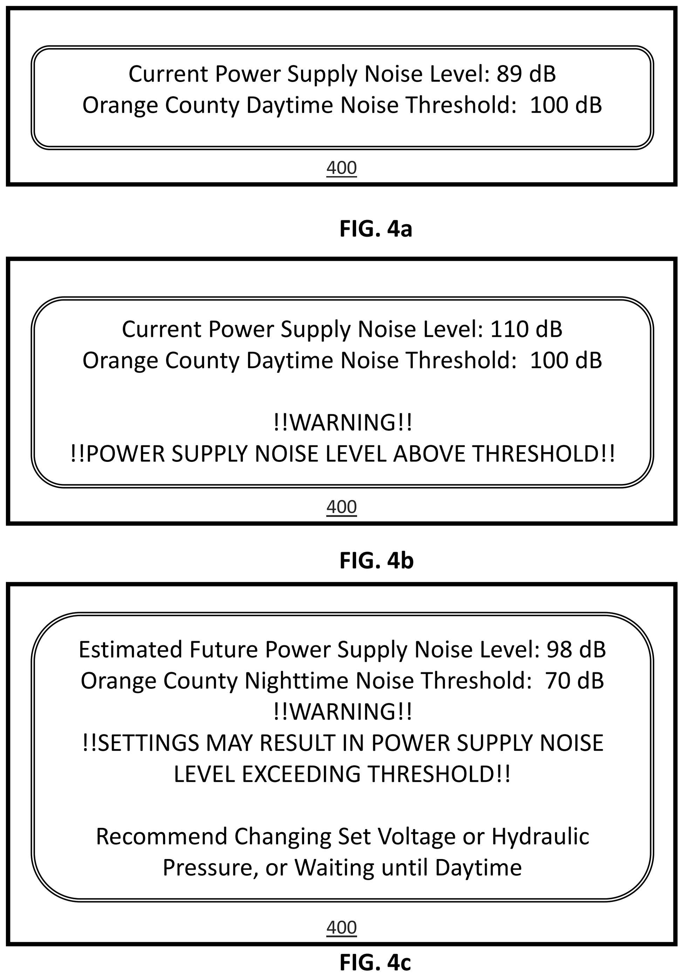

FIG. 4a, for example, shows a display screen 400 of the UI 214 outputting an estimated current noise level of 89 decibels (dB). While FIG. 4a shows an overall noise level estimate, in some examples, the UI 214 additionally, or alternatively, outputs individual noise level estimates for each noise generating device of the welding-type power supply 200 (e.g., engine 204, air compressor 208, hydraulic pump 206, etc.).

In the example of FIG. 4a, the display screen 400 further shows a noise threshold of 100 decibels. While FIG. 4a shows the noise level and noise threshold as being determined and/or output in decibels, in some examples, the noise level and/or noise threshold may alternatively, or additionally, be determined/output in terms (and/or units) of sound power (e.g., Lw) and/or sound pressure (e.g., Lp). Though FIG. 4a shows a numerical indication of the noise level/threshold, in some examples, the noise level and/or noise threshold may alternatively, or additionally, be indicated using a textual indication (e.g., High, Medium, Low, etc.), a gauge, a meter, and/or some other (e.g., non-numerical) means.

FIG. 4b further shows the display screen 400 outputting an additional notification when the current estimated noise level exceeds the noise threshold, which may alert the operator 120 that there may be an issue and/or need to change one or more power supply settings. Though one noise threshold is shown in the examples of FIG. 4a-4b, in some examples, there may be multiple noise thresholds that are identified and/or shown (e.g., a different noise threshold for each of the welding-type power supply 200, engine 204, air compressor 208, hydraulic pump 206, etc.).

In some examples, the noise threshold is entered manually by the operator 120, such as, for example, via one or more input devices of the UI 214. In some examples, the noise threshold is determined automatically by the control circuitry 212.

In some examples, the control circuitry 212 uses a sound map 299 to automatically determine a noise threshold. In the example of FIG. 2, the sound map 299 is shown as being part of and/or stored by memory circuitry 216 of the control circuitry 212. In some examples, the sound map 299 comprises one or more data structures (e.g., tables, graphs, matrices, etc.) that map and/or associate different noise thresholds with different geographical locations and/or times of day.

In some examples, communication circuitry 218 of the welding-type power supply 200 is used to identify a geographical location of the welding-type power supply 200. For example, the communication circuitry 218 may be configured for interaction and/or communication with a global positioning system (GPS) and/or other positioning system. In some examples, the control circuitry 212 is configured to identify a geographic location/position of the welding-type power supply 200 based on data (and/or electrical signals) received from (and/or through) the communication circuitry 218.

In some examples, clock circuitry (e.g., of the control circuitry 212) is used to determine time of day. In some examples, the clock circuitry is part of the processing circuitry 220 of the control circuitry 212. In some examples, the control circuitry 212 automatically determines an applicable noise threshold by determining the noise threshold that is associated with the identified geographic location and/or time of day in the sound map 299.

In the example of FIGS. 4a-4b, the display screen 400 shows the noise threshold as corresponding to the geographic location of Orange County, California. The display screen 400 additionally indicates that the noise threshold corresponds to the daytime hours of the day. In some examples, the UI 214 may additionally, or alternatively, give a more granular and/or high level description of the location and/or time corresponding to the noise threshold (e.g., latitude/longitude location, state, hour/minute time, am/pm, etc.). In some examples, the sound map 299 and/or control circuitry 212 may additionally, or alternatively, identify and/or determine more granular locations and/or times, and/or more high level locations and/or times.

In some examples, the sound map 299 may also be used to estimate current and/or future noise levels of the welding-type power supply 200 in general, and/or the engine 204, air compressor 208, hydraulic pump 206, and/or other noise generating devices in particular. For example, the sound map 299 may additionally, or alternatively, map and/or associate different device outputs and/or different (e.g., non-sound) sensor data with different noise levels.

In such an example, one or more of the sensors 202 may be configured to sense, detect, measure, and/or capture (e.g., non-sound) sensor data relating to a (e.g., non-sound) output of a device. Thereby, the control circuitry 212 may be able to estimate current/future noise levels by determining a noise level in the sound map 299 that is associated with the sensor data captured by the sensor(s) 202 (and/or the information represented by the sensor data). In some examples where there is not a 1 to 1 correlation (and/or direct match) between sensor data/information in the sound map 299 and sensor data/information captured by the sensor(s) 202, the control circuitry 212 may use interpolation to estimate the noise level (e.g., based on the one, two, three, four, etc. closest matches in the sound map 299).

In some examples, an estimation algorithm is used to estimate the current and/or future noise level (e.g., instead of, or in addition to, using the sound map 299). For example, the control circuitry 212 may use a proprietary estimation algorithm (e.g., stored in memory circuitry 216) to dynamically estimate the noise level based on sensor data captured by one or more of the sensors 202. In some examples, there may be multiple algorithms (e.g., one for each of the noise generating devices).

In some examples, one or more of the algorithms may be a machine learning algorithm that is continually updated and/or improved with data that is input into the sound map 299. In some examples, the algorithm(s) may be used if there is no relevant entry in the sound map 299 corresponding to the captured sensor data (and/or within some threshold range of the captured sensor data). In some examples, the algorithm(s) may be used for estimation until a threshold amount of data has been compiled in the sound map 299. In some examples, the control circuitry 212 may use the algorithm(s) by default, or select whether to use the algorithm vs. the sound map 299 based on input from the operator 120 (e.g., received via the UI 214).

In some examples, there are multiple sound maps 299. For example, there may be different sound maps 299 for noise thresholds and noise estimates. As another example, there may be different sound maps 299 for different noise estimates. In some examples, there is a different sound map 299 for noise estimates of each noise generating device of the welding-type power supply 200. In some examples, there is a different sound map 299 for one or more different types of data/information associated with the noise level of a particular noise generating device.

In some examples, the data in the sound map 299 may be compiled over time using sensor data captured by the (e.g., sound and/or non-sound) sensor(s) 202 of the welding-type power supply 200. For example, one or more (e.g., sound) sensors 202 may capture sensor data relating to the noise level of the welding-type power supply 200 in general, and/or the engine 204, air compressor 208, hydraulic pump 206, and/or other noise generating devices in particular. At approximately the same time, one or more (e.g., non-sound) sensors 202 may capture sensor data relating to an input/output of one or more of the devices of the welding-type power supply 200, and the input/output level(s) may be associated with the noise level(s).

In the example of FIG. 2, the welding-type power supply 200 includes several devices whose inputs, outputs, and/or other characteristics may be associated with (and/or thereafter used to estimate) noise level, even if the devices themselves do not generate significant amounts of noise. For example, in FIG. 2 the engine 204 is shown as being (e.g., mechanically) coupled to a generator 222 (e.g., via a rotor). In some examples, the engine 204 outputs mechanical power in the form of a rotating rotor. In some examples, the generator 222 produces electrical power using the mechanical power output by the engine 204 (e.g., via a stationary magnetic stator and magnets that are rotated by the rotor). While, in some examples, the generator 222 produces little noise itself, the electrical output produced by the generator 222 is directly dependent upon the mechanical output of the engine 204 (e.g., the rotor rotational speed). Because of the direct relationship between the operation of the engine 204 and the operation of the generator 222, in some examples, the electrical output of the generator 222 can be used to estimate a noise level of the engine 204.

In the example of FIG. 2, sensors 202 are positioned proximate the engine 204 and generator 222. In some examples, sensor data captured by these sensors 202 is used by the control circuitry 212 to estimate (e.g., non-sound) characteristics of the engine 204 and/or generator 222. For example, sensor data might include and/or relate to the mechanical power output of the engine 204 (e.g., rotor rotation speed), the electrical output of a generator 222 (e.g., electrical current, electrical voltage, electrical power etc.), and/or other characteristics of the engine 204 and/or generator 222 (e.g., temperature, electrical impedance, etc.).

In some examples, sensor data/information relating to one or more inputs, outputs, and/or other characteristics of the engine 204 and/or generator 222 is associated with one or more (e.g., measured) noise levels in the sound map 299. Once this association in the sound map 299 occurs, the sound map 299 may be referenced in the future to estimate a current and/or future noise level, given a target and/or measured input/output/characteristic of the engine 204 and/or generator 222.

In the example of FIG. 2, the welding-type power supply 200 also includes several other devices whose inputs, outputs, and/or other characteristics may be sensed and/or associated with noise level (and/or thereafter used to estimate noise level), even if the devices themselves do not generate significant amounts of noise. For example, the welding-type power supply 200 is shown as including a valve 223, energy storage device 224, welding-type power conversion circuitry 226, and auxiliary power conversion circuitry 228.

In some examples, the valve 223 comprises an electrically controllable (e.g., solenoid) valve configured to control flow of shielding gas through the welding-type power supply 200 (e.g., in response to one or more control signals from the control circuitry 212). In some examples, the energy storage device 224 comprises a battery or other storage mechanism by which (e.g., electrical) energy can be stored. In some examples, the welding-type power conversion circuitry 226 comprises circuitry configured to receive electrical input power and convert the electrical input power to electrical welding-type output power. In some examples, the auxiliary power conversion circuitry 228 comprises circuitry configured to receive electrical input power and convert the electrical input power to electrical auxiliary output power.

In some examples, the welding-type power conversion circuitry 226, and/or auxiliary power conversion circuitry 228 include circuit elements (e.g., transformers, rectifiers, capacitors, inductors, diodes, transistors, switches, and so forth) capable of converting the input power to output power. In some examples, the welding-type power conversion circuitry 226, and/or auxiliary power conversion circuitry 228 also include one or more controllable circuit elements (e.g., switches, relays, transistors, etc.) configured to change states (e.g., fire, turn on/off, close/open, etc.) based on one or more control signals (e.g., received from the control circuitry 212). In some examples, the state(s) of the controllable circuit elements may impact the operation of the welding-type power conversion circuitry 226, and/or auxiliary power conversion circuitry 228, and/or impact characteristics (e.g., current/voltage magnitude, frequency, waveform, etc.) of the output power provided by the welding-type power conversion circuitry 226, and/or auxiliary power conversion circuitry 228. In some examples, the control circuitry 212 is configured to control operation of the welding-type power conversion circuitry 226, and/or auxiliary power conversion circuitry 228 via one or more control signals that control operation of the controllable circuit elements.

In some examples, the inputs, outputs, and/or other characteristics of the valve 223, energy storage device 224, welding-type power conversion circuitry 226, and/or auxiliary power conversion circuitry 228 can be used to estimate the current/future noise level of the engine 204. In some examples, sensor data captured by sensors 202 positioned proximate the valve 223, energy storage device 224, welding-type power conversion circuitry 226, and/or auxiliary power conversion circuitry 228 is used by the control circuitry 212 to estimate (e.g., non-sound) characteristics of the valve 223, energy storage device 224, welding-type power conversion circuitry 226, and/or auxiliary power conversion circuitry 228.

For example, sensor data might include and/or relate to gas input/output of the valve 223 (e.g., gas flow rate, gas content/composition, gas temperature, gas pressure, etc.). As another example, sensor data might include and/or relate to electrical input/output of the energy storage device 224 (e.g., electrical current, electrical voltage, electrical power, etc.). As another example, sensor data might include and/or relate to electrical input/output of the welding-type power conversion circuitry 226. As another example, sensor data might include and/or relate to electrical input/output of the auxiliary power conversion circuitry 228. As another example, sensor data might include and/or relate to other characteristics of the valve 223, energy storage device 224, welding-type power conversion circuitry 226, and/or auxiliary power conversion circuitry 228 (e.g., temperature, electrical impedance, etc.).

In some examples, sensor data/information relating to one or more inputs, outputs, and/or other characteristics of the valve 223, energy storage device 224, welding-type power conversion circuitry 226, and/or auxiliary power conversion circuitry 228 is associated with one or more (e.g., measured) noise levels in the sound map 299. Once this association in the sound map 299 occurs, the sound map 299 may be referenced in the future to estimate a current and/or future noise level, given a target and/or measured input/output/characteristic of the energy storage device 224, welding-type power conversion circuitry 226, and/or auxiliary power conversion circuitry 228.

In some examples, sensor data/information relating to one or more inputs, outputs, and/or other characteristics of the air compressor 208 and/or hydraulic pump 206 can be used to estimate the current/future noise level of the air compressor 208 and/or hydraulic pump 206. In some examples, sensor data captured by sensors 202 positioned proximate the air compressor 208 and/or hydraulic pump 206 is used by the control circuitry 212 to estimate (e.g., non-sound) characteristics of the air compressor 208 and/or hydraulic pump 206. For example, sensor data might include and/or relate to fluid flow rate, fluid volume, fluid temperature, fluid humidity, and/or other data/information.

In some examples, sensor data/information relating to one or more inputs, outputs, and/or other characteristics of the air compressor 208 and/or hydraulic pump 206 is associated with one or more (e.g., measured) noise levels in the sound map 299. Once this association in the sound map 299 occurs, the sound map 299 may be referenced in the future to estimate a current and/or future noise level, given a target and/or measured input/output/characteristic of the air compressor 208 and/or hydraulic pump 206.

In some examples, the data recorded and/or associated in the sound map 299 may be used to control and/or regulate the engine 204, generator 222, hydraulic pump 206, air compressor 208, and/or other noise generating device(s). For example, once a noise threshold is identified, the control circuitry 212 may identify an input/output/characteristic (e.g., of the engine 204, generator 222, hydraulic pump 206, air compressor 208, etc.) in the sound map 299 that would result in a noise level that is equal to the noise threshold (or that is within some threshold range above or below the noise threshold). The input/output/characteristic that corresponds to the noise level (that corresponds to the noise threshold) may be used as an input/output/characteristic threshold. Thereafter, the control circuitry 212 may control the and/or regulate the engine 204, generator 222, hydraulic pump 206, air compressor 208, and/or other noise generating device(s) such that its input/output/characteristic remains below the input/output/characteristic threshold identified from the sound map 299, thereby ensuring that the noise level stays below the noise threshold.

In some examples, the data recorded and/or associated in the sound map 299 may also be used to estimate a future noise level of the welding-type power supply 200, engine 204, air compressor 208, and/or other noise generating device. For example, the control circuitry 212 may estimate a target output and/or output demand, and estimate the amount/level of audible noise that will be generated by the welding-type power supply 200 and/or its noise generating devices to meet the target/demand. In some examples, the target output and/or output demand may be used to estimate current, as well as future, noise level.

In some examples, the control circuitry 212 may estimate the output target/demand based on the geographic location, time of day, and/or an operations schedule (e.g., stored in memory circuitry 216 and/or obtained from a remote device via communications circuitry 218). In some examples, the control circuitry 212 may estimate the future output target/demand based on data entered by the operator 120.

For example, the operator 120 may enter and/or configure one or more power supply settings from which the control circuitry 212 can determine a target current and/or voltage to be output by the welding-type power conversion circuitry 226. In some examples, power supply settings might include welding-type process (e.g., flux cored, MIG stainless, MIG steel, MIG aluminum, TIG, stick, etc.), current, voltage, gas type, gas flow rate, gas pressure, hydraulic fluid type, hydraulic fluid flow rate, hydraulic fluid pressure compressed air volume, compressed air flow rate, compressed air pressure, electrode diameter, material thickness, and/or other information relevant to the operation of the welding-type power supply 200.

In some examples, in addition to target current/voltage, the control circuitry 212 might determine from the power supply setting(s) a target rate and/or amount by which the energy storage device 224 (and/or an external battery auxiliary device 108) should be recharged and/or replenished with electrical energy. From the target current/voltage and/or recharge information, the control circuitry 212 may estimate an overall electrical power demand of the welding-type power supply 200. In some examples, the control circuitry 212 can estimate the amount of audible noise that will be generated by the engine 204 to meet the power output demand (e.g., via the sound map 299 and/or sound algorithm).

FIG. 4c shows an example of the display screen 400 outputting an estimated future noise level that exceeds the identified noise threshold. As shown, the identified noise threshold is lower due to it being for night time (rather than the higher noise threshold for day time shown in FIGS. 4a-4b). The display screen 400 also shows an additional notification indicating that the future estimated noise level (e.g., determined based on the entered power supply settings and/or target outputs) will likely exceed the identified noise threshold.

In the example of FIG. 4c, a recommendation for changing certain power supply settings and/or waiting for another time of day is also shown. Though a simple recommendation is shown in the example of FIG. 4c, in some examples, the recommendation may be more detailed. In some examples, the recommendation(s) may be determined based on the estimated noise level(s), sound map(s) 299, algorithm(s), identified noise threshold(s), and/or other information.

In some examples, the control circuitry 212 may control the various devices of the welding-type power supply 200 (e.g., engine 204, generator 222, energy storage device 224, air compressor 208, hydraulic pump 206, etc.) to ensure that the noise generated by the welding-type power supply 200 remains below the identified noise threshold (e.g., to the extent possible), and/or as close to the noise threshold as possible (e.g., to the extent it is not possible to stay below). In some examples, this control may occur at all times. In some examples, this control may occur in response to the current noise level exceeding the noise threshold. In some examples, the control circuitry 212 may disable the entire welding-type power supply 200 in response to the current noise level exceeding the noise threshold (e.g., by some threshold amount).

In some examples, the control circuitry 212 may reduce the output of a device that generates noise (e.g., the engine 204) and/or compensate for that reduced output using the output of another device (e.g., the energy storage device 224). For example, if keeping the engine 204 at a low enough output to stay below the noise threshold results in the generator 222 producing too little electrical power to meet the determined power demand, the control circuitry 212 might use the power output by the generator 222 as a portion of the input power to the welding-type power conversion circuitry 226 (to meet a portion of the power demand) and use stored electrical energy of the energy storage device 224 (or auxiliary power from the first welding-type power supply 200a) as a remaining portion of the input power (to meet the remaining power demand).

In some examples, the welding-type power supply 200 uses switch circuitry 230 to control whether the welding-type power conversion circuitry 226 (and/or auxiliary power conversion circuitry 228) uses electrical energy from the generator 222, energy storage device 224, or external device (e.g., first welding-type power supply 200a) as input power at any given moment. In some examples, the welding-type power supply 200 additionally uses switch circuitry 230 to control whether power is routed to the energy storage device 224 for purposes of recharging (e.g., via electrical output power from the generator 222).

In some examples, the switch circuitry 230 comprises one or more electrically controllable switching elements configured to open or close a circuit path in response to an electrical signal (e.g., received from the control circuitry 212). In some examples, one or more of the electrically controllable switching elements are switches. In some examples, one or more of the electrically controllable switching elements are transistors.

In the example of FIG. 2, the control circuitry is electrically connected (and/or in electrical communication) with the switch circuitry 230. The switch circuitry 230 is additionally shown positioned between the generator 222 and energy storage device 224, as well as at the input of the welding-type power conversion circuitry 226 (and auxiliary power conversion circuitry 228). While shown as separate circuitry in the example of FIG. 2, in some examples, (at least some of) the switch circuitry 230 may be considered part of the energy storage device 224, welding-type power conversion circuitry 226, and/or auxiliary power conversion circuitry 228.

In the example of FIG. 2, the memory circuitry 216 of the control circuitry 212 includes and/or stores a noise management process 300. In some examples, the noise management process 300 comprises analog circuitry (e.g., of the control circuitry 212). In some examples, the noise management process 300 comprises machine readable instructions configured for execution by the processing circuitry 220.

While not shown in the example of FIG. 2, in some examples, the memory circuitry 216 may also include (and/or store) machine readable instructions comprising counter and/or clock programs. In some examples, the memory circuitry 216 may also include (and/or store) one or more determined, target, present, and/or past power supply settings (e.g., associated with timestamp information). In some examples, the noise management process 300 may use and/or update one or more of the stored power supply settings during operation.

In some examples, the noise management process 300 is a process by which an estimation is made of the amount/level of noise that is currently output (or that will be output in the future) by the welding-type power supply 200, engine 204, air compressor 208, hydraulic pump 206, and/or other noise generating device. In some examples, one or more noise thresholds are additionally identified, and/or operation of the welding-type power supply 200 is controlled in view of the noise threshold(s), during execution of the noise management process 300.

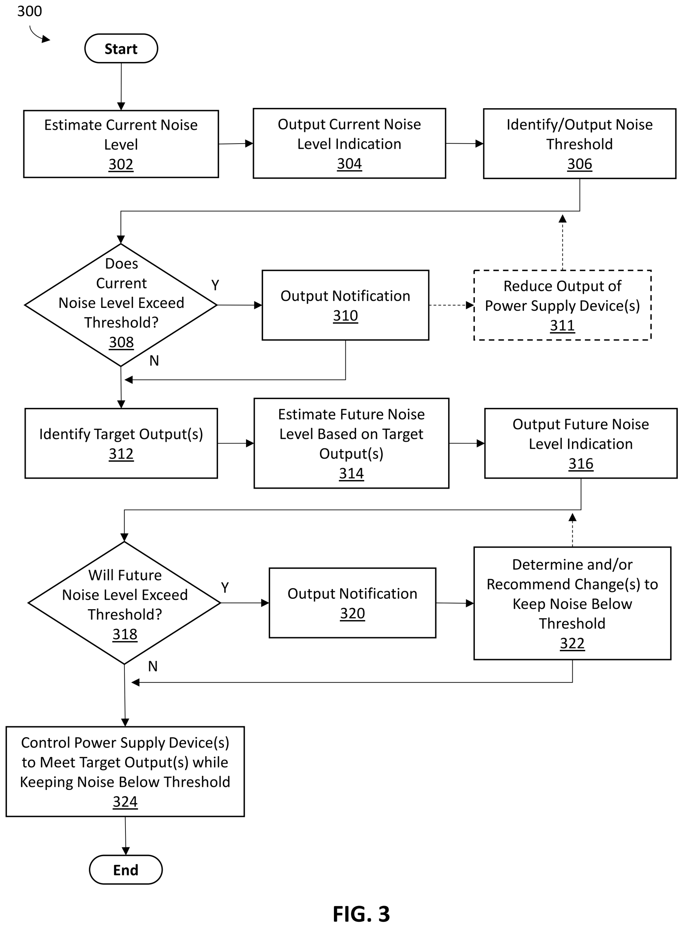

FIG. 3 is a flowchart illustrating operation of an example noise management process 300. While the noise management process 300 may sometimes described below as conducting certain actions for the sake of understanding, it should be understood that one or more of the above described components of the welding-type power supply 200 may undertake the actions on behalf of (and/or according to) the noise management process 300.

In the example of FIG. 3, the noise management process 300 begins at block 302 where the control circuitry 212 estimates an amount and/or level of audible noise that is being produced by the welding-type power supply 200 in general, and/or by one or more particular noise generating devices of the welding-type power supply 200 in particular (e.g., the engine 204, air compressor 208, hydraulic pump 206, etc.). In some examples, the noise level is estimated based on (e.g., sound) sensor data captured by one or more (e.g., sound) sensors 202, as discussed above. In some examples, the noise level is estimated based on (e.g., non-sound) sensor data captured by one or more (e.g., non-sound) sensors 202, in conjunction with one or more estimation algorithms and/or sound maps 299, as discussed above. In some examples where the noise level is estimated based on captured (e.g., sound) sensor data, one or more of the sound maps 299 (and/or the algorithm(s)) are updated based on the captured sensor data and estimated noise level, as discussed above.

After block 302, the noise management process 300 is shown proceeding to block 304, where the control circuitry 212 outputs an indication of the estimated current noise level to the operator 120 via the UI 214, as discussed above. An example of this is shown, for example, in FIGS. 4a-4b, as discussed above.

After block 304, the control circuitry 212 identifies a noise threshold at block 306 of the noise management process 300, such as discussed above. Then, at block 308, the control circuitry 212 compares the estimated current noise level with the identified noise threshold to determine whether the current noise level exceeds the noise threshold. If the current noise level exceeds the noise threshold, the control circuitry 212 outputs a notification at block 310, such as discussed above. An example of a notification that might be output if the current noise level exceeds the noise threshold is shown in FIG. 4b, as discussed above.

In some examples, if the current noise level exceeds the noise threshold, the control circuitry 212 reduces the output of one or more of the noise generating devices of the welding-type power supply 200 at block 311, in an attempt to reduce the current noise to a level below the noise threshold. This possibility is shown in dotted lines in the example of FIG. 3 because of the danger that such a reduction might negatively impact an ongoing welding-type operation.

In some examples, block 311 may only occur if the target output(s) and/or setting(s) of the power supply 300 will not be violated by the change in output (as a change in output may otherwise have a negative impact on an ongoing welding-type operation). In some examples, block 311 may only occur in response to some input from the operator 120 confirming that output from all or one or more particular devices should be changed (e.g., in response to a query). As shown, if block 311 does occur, the noise management process 300 may loop back to block 308.

In the example of FIG. 3, the noise management process 300 proceeds to block 312 if the current noise level does not exceed the noise threshold, and/or if block 311 does not execute. At block 312 of the noise management process 300, the control circuitry 212 identifies one or more target outputs/settings of the welding-type power supply 200 and/or one or more target outputs of one or more devices of the welding-type power supply 200, such as discussed above. In some examples, one or more of the target output are determined based on the settings of the welding-type power supply 200. In some examples (e.g., where block 311 occurs), block 312 may occur earlier in the noise management process 300, (e.g., so that the control circuitry 212 can determine at block 311 whether a reduction in output(s) would violate the target output(s)).

After block 312, the noise management process 300 proceeds to block 314, where the control circuitry 212 estimates (e.g., based on the target output(s)) an amount/level of noise that will be produced in the future by the welding-type power supply 200, and/or by one or more noise generating devices of the welding-type power supply 200 (e.g., the engine 204, air compressor 208, hydraulic pump 206, etc.), such as discussed above. After block 314, the noise management process 300 proceeds to block 316, where the control circuitry 212 outputs an indication of the estimated future noise level to the operator 120 via the UI 214, as discussed above. An example of the output at block 316 is shown, for example, in FIG. 4c, as discussed above.

After block 316, the noise management process 300 proceeds to block 318, where the control circuitry 212 compares the estimated future noise level with the identified noise threshold to determine whether the future noise level will exceed the noise threshold. If the future noise level exceeds the noise threshold, the control circuitry 212 outputs a notification at block 320, such as discussed above. If the future noise level exceeds the noise threshold, the control circuitry 212 additionally (at block 322) determines and/or recommends (e.g., via the UI 214) one or more changes that might help to keep the future noise level under the noise threshold. An example of a notification and/or recommendation that might be output if the future noise level exceeds the noise threshold is shown in FIG. 4c, as discussed above.

In some examples, one or more of the recommendations provided at block 322 are automatically implemented (e.g., by the control circuitry 212) at block 322. In some examples, the one or more recommendations are only automatically implemented in response to some (e.g., confirming) input from the operator 120 (e.g., entered via the UI 214 in response to a query). In examples where the one or more of the recommendations provided at block 322 are automatically implemented, the noise management process 300 returns to block 316 (e.g., as indicated by the dotted line arrow).

If the future noise level is estimated to (e.g., be able to) remain below the noise threshold at block 318, and/or if the one or more of the recommendations are not automatically implemented at block 322, the noise management process 300 proceeds to block 324. At block 324, the control circuitry 212 controls and/or manages the output(s) of the noise generating devices of the welding-type power supply 200 such that the amount/level of noise generated remains below the noise threshold. While shown as ending after block 324, in some examples, the noise management process 300 instead returns to block 302.

In some examples, the noise management process 300 enables the disclosed welding-type power supply 200 (and/or welding-type system 100) to estimate an amount/level of audible noise that is currently produced (and/or that will be produced) by the welding-type power supply 200, and/or by one or more of the noise generating devices of the welding-type power supply 200 (e.g., the engine 204, air compressor 208, hydraulic pump 206, etc.). In some examples, during the noise management process 300, one or more noise thresholds are additionally identified, and/or operation of the welding-type power supply 200 is controlled in view of the noise threshold(s). This may be helpful to an operator 120 if, for example, the welding-type power supply 200 is operating in a noise sensitive area (e.g., near a hospital, school, etc.), and/or there are labor standards or local government regulations that prohibit noise levels above a given limit.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software

(including firmware), or a combination of hardware and software, using the same mechanisms used for disabling.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.
Certain embodiments of the invention are described in the following clauses:
Clause 1 A welding-type power supply, comprising:
   power conversion circuitry configured to convert input power to welding-type output power suitable for use by a welding-type tool during a welding-type operation;
   a noise generating device;
   control circuitry configured to estimate a noise level of the welding-type power supply or the noise generating device; and
   a user interface configured to output an indication of the noise level.
Clause 2 The welding-type power supply of clause 1, wherein the noise generating device comprises an engine-generator, a hydraulic pump, or an air compressor.
Clause 3 The welding-type power supply of clause 1, wherein the control circuitry is configured to estimate the noise level based on sound sensor data captured by a sound sensor, the sound sensor data relating to an audible noise of the welding-type power supply or the noise generating device.
Clause 4 The welding-type power supply of clause 1, wherein the noise generating device is configured to produce an output, and the control circuitry is configured to estimate the noise level based on an amount of the output of the noise generating device.
Clause 5 The welding-type power supply of clause 4, further comprising memory circuitry storing one or more associations between a plurality of output amounts and one or more different noise levels, the control circuitry being configured to estimate the noise level based on the one or more associations and the amount of the output of the noise generating device.
Clause 6 The welding-type power supply of clause 1, wherein the control circuitry is further configured to:
   identify a noise threshold,
   determine whether the noise level exceeds the noise threshold, and
   in response to determining the noise level exceeds the noise threshold:
      output a notification via the user interface,
      control the noise generating device to reduce an output of the noise generating device, or
      disable the welding-type power supply.
Clause 7 The welding-type power supply of clause 1, wherein the control circuitry is further configured to:
   identify a noise threshold,
   identify an output demand,
   estimate a future noise level that will be produced by the welding-type power supply based on the output demand,
   determine whether the future noise level exceeds the noise threshold, and
   in response to determining the future engine noise level exceeds the noise threshold, output a notification, or recommend a different power supply setting, via the user interface.
Clause 8 A welding-type power supply, comprising:
   power conversion circuitry configured to convert input power to welding-type output power suitable for use by a welding-type tool during a welding-type operation;
   a noise generating device configured to produce an output, the noise generating device comprising an engine-generator, a hydraulic pump, or an air compressor;
   control circuitry configured to estimate a noise level of the welding-type power supply or the noise generating device based on sound sensor data captured by a sound sensor, or an amount of the output of the noise generating device; and
   a user interface configured to output an indication of the noise level.
Clause 9 The welding-type power supply of clause 8, wherein the output comprises mechanical engine power, electrical generator power, hydraulic fluid flow, or compressed air.
Clause 10 The welding-type power supply of clause 8, further comprising memory circuitry storing one or more associations between a plurality of output amounts and one or more different noise levels, the control circuitry being configured to estimate the noise level based on the one or more associations and the amount of the output of the noise generating device.
Clause 11 The welding-type power supply of clause 8, wherein the control circuitry is further configured to:
   identify a noise threshold,
   determine whether the noise level exceeds the noise threshold, and
   in response to determining the noise level exceeds the noise threshold:
      output a notification via the user interface,
      control the noise generating device to reduce the output, or
      disable the welding-type power supply.
Clause 12 The welding-type power supply of clause 8, wherein the control circuitry is further configured to:
   identify a noise threshold,
   identify an output demand based on a power supply setting,
   estimate a future noise level that will be produced by the welding-type power supply based on the output demand,
   determine whether the future noise level exceeds the noise threshold, and
   in response to determining the future noise level exceeds the noise threshold, output a notification, or recommend a different power supply setting, via the user interface.
Clause 13 The welding-type power supply of clause 8, wherein the noise generating device comprises the engine-generator, and the output comprises a mechanical engine power or an electrical generator power,
   the engine-generator comprising an engine configured to output the mechanical engine power, and a generator configured to produce the electrical generator power from the mechanical engine power,
   the user interface being further configured to receive a noise setting, and
   the control circuitry being further configured to:
      identify the noise threshold based on the noise setting,
      estimate a power threshold based on the noise threshold,
      control the engine such that the mechanical engine power output by the engine remains below the power threshold, or the electrical generator power produced by the generator remains below the power threshold, and
      use at least some of the electrical generator power produced by the generator to replenish electrical energy stored by an internal energy storage device of the welding-type power supply, or an external storage device that is electrically connected to the welding-type power supply.
Clause 14 The welding-type power supply of clause 8, wherein the noise generating device comprises the engine-generator, and the output comprises a mechanical engine power or an electrical generator power,
   the engine-generator comprising an engine configured to output the mechanical engine power, and a generator configured to produce the electrical generator power from the mechanical engine power,
   the welding-type power supply further comprising an energy storage device configured to store electrical energy, and
   the control circuitry being further configured to:
      identify a noise threshold,
      estimate a power threshold based on the noise threshold,
      control the engine such that the mechanical engine power output by the engine remains below the power threshold, or the electrical generator power produced by the generator remains below the power threshold,
      identify a power demand,
      control the power conversion circuitry to use the electrical generator power produced by the generator as a first portion of the input power to meet a portion of the power demand, and
      control the power conversion circuitry to use the electrical energy stored by the energy storage device as a second portion of the input power to meet a remaining portion of the power demand.
Clause 15 A welding-type power supply, comprising:
   an engine configured to output mechanical power;
   a generator configured to produce electrical power from the mechanical power output by the engine;
   power conversion circuitry configured to convert input power to welding-type output power suitable for use by a welding-type tool during a welding-type operation, the power conversion circuitry being configured to use the electrical power produced by the generator as the input power;
   control circuitry configured to estimate a noise level of the welding-type power supply or the noise generating device based on sound sensor data captured by a sound sensor, a first amount of the mechanical power output by the engine, or a second amount of the electrical power produced by the generator; and
   a user interface configured to output an indication of the noise level.
Clause 16 The welding-type power supply of clause 15, further comprising a hydraulic pump, or an air compressor, the control circuitry being configured to estimate the noise level based on (i) the first amount of the mechanical power output by the engine, or a second amount of the electrical power produced by the generator, and (ii) a third amount of hydraulic fluid output by the hydraulic pump, or a fourth amount of compressed air output by the air compressor.
Clause 17 The welding-type power supply of clause 15, further comprising memory circuitry storing one or more associations between a plurality of output amounts and one or more different noise levels, the control circuitry being configured to estimate the noise level based on (i) the one or more associations and (ii) the first amount of the mechanical power output by the engine, or the second amount of the electrical power produced by the generator.
Clause 18 The welding-type power supply of clause 15, wherein the control circuitry is further configured to:
   identify a noise threshold,
   determine whether the noise level exceeds the noise threshold, and
   in response to determining the noise level exceeds the noise threshold:
      output a notification via the user interface,
      control the engine to reduce the mechanical power output by the engine, or disable the welding-type power supply.
Clause 19 The welding-type power supply of clause 15, wherein the control circuitry is further configured to:
   identify a noise threshold,
   identify a power demand based on a power supply setting,
   estimate a future noise level that will be produced by the welding-type power supply based on the power demand,
   determine whether the future noise level exceeds the noise threshold, and
   in response to determining the future noise level exceeds the noise threshold, output a notification, or recommend a different power supply setting, via the user interface.
   Clause 20 The welding-type power supply of clause 15, further comprising an energy storage device configured to store electrical energy, the control circuitry being further configured to:
      identify a noise threshold,
      estimate a power threshold based on the noise threshold,
      control the engine such that the mechanical power output by the engine remains below the power threshold, or the electrical power produced by the generator remains below the power threshold,
      identify a power demand,
      control the power conversion circuitry to use the electrical power produced by the generator as a first portion of the input power to meet a portion of the power demand, and
      control the power conversion circuitry to use the electrical energy stored by the energy storage device as a second portion of the input power to meet a remaining portion of the power demand.

## Claims

1. A welding-type power supply, comprising:
power conversion circuitry configured to convert input power to welding-type output power suitable for use by a welding-type tool during a welding-type operation;
a noise generating device;
control circuitry configured to estimate a noise level of the welding-type power supply or the noise generating device; and
a user interface configured to output an indication of the noise level.

2. The welding-type power supply of claim 1, wherein the noise generating device comprises an engine-generator, a hydraulic pump, or an air compressor, or
wherein the control circuitry is configured to estimate the noise level based on sound sensor data captured by a sound sensor, the sound sensor data relating to an audible noise of the welding-type power supply or the noise generating device.

3. The welding-type power supply of claim 1, wherein the noise generating device is configured to produce an output, and the control circuitry is configured to estimate the noise level based on an amount of the output of the noise generating device.

4. The welding-type power supply of claim 3, further comprising memory circuitry storing one or more associations between a plurality of output amounts and one or more different noise levels, the control circuitry being configured to estimate the noise level based on the one or more associations and the amount of the output of the noise generating device.

5. The welding-type power supply of claim 1, wherein the control circuitry is further configured to:
identify a noise threshold,
determine whether the noise level exceeds the noise threshold, and
in response to determining the noise level exceeds the noise threshold:
output a notification via the user interface,
control the noise generating device to reduce an output of the noise generating device, or
disable the welding-type power supply.

6. The welding-type power supply of claim 1, wherein the control circuitry is further configured to:
identify a noise threshold,
identify an output demand,
estimate a future noise level that will be produced by the welding-type power supply based on the output demand,
determine whether the future noise level exceeds the noise threshold, and
in response to determining the future engine noise level exceeds the noise threshold, output a notification, or recommend a different power supply setting, via the user interface.

7. A welding-type power supply, comprising:
power conversion circuitry configured to convert input power to welding-type output power suitable for use by a welding-type tool during a welding-type operation;
a noise generating device configured to produce an output, the noise generating device comprising an engine-generator, a hydraulic pump, or an air compressor;
control circuitry configured to estimate a noise level of the welding-type power supply or the noise generating device based on sound sensor data captured by a sound sensor, or an amount of the output of the noise generating device; and
a user interface configured to output an indication of the noise level.

8. The welding-type power supply of claim 7, wherein the output comprises mechanical engine power, electrical generator power, hydraulic fluid flow, or compressed air, or
Wherein the welding-type power supply further comprises memory circuitry storing one or more associations between a plurality of output amounts and one or more different noise levels, the control circuitry being configured to estimate the noise level based on the one or more associations and the amount of the output of the noise generating device.

9. The welding-type power supply of claim 7, wherein the control circuitry is further configured to:
identify a noise threshold,
determine whether the noise level exceeds the noise threshold, and
in response to determining the noise level exceeds the noise threshold:
output a notification via the user interface,
control the noise generating device to reduce the output, or
disable the welding-type power supply, or wherein the control circuitry is further configured to:
identify a noise threshold,
identify an output demand based on a power supply setting,
estimate a future noise level that will be produced by the welding-type power supply based on the output demand,
determine whether the future noise level exceeds the noise threshold, and
in response to determining the future noise level exceeds the noise threshold, output a notification, or recommend a different power supply setting, via the user interface.

10. The welding-type power supply of claim 7, wherein the noise generating device comprises the engine-generator, and the output comprises a mechanical engine power or an electrical generator power,
the engine-generator comprising an engine configured to output the mechanical engine power, and a generator configured to produce the electrical generator power from the mechanical engine power,
the user interface being further configured to receive a noise setting, and
the control circuitry being further configured to:
identify the noise threshold based on the noise setting,
estimate a power threshold based on the noise threshold,
control the engine such that the mechanical engine power output by the engine remains below the power threshold, or the electrical generator power produced by the generator remains below the power threshold, and
use at least some of the electrical generator power produced by the generator to replenish electrical energy stored by an internal energy storage device of the welding-type power supply, or an external storage device that is electrically connected to the welding-type power supply.

11. The welding-type power supply of claim 7, wherein the noise generating device comprises the engine-generator, and the output comprises a mechanical engine power or an electrical generator power,
the engine-generator comprising an engine configured to output the mechanical engine power, and a generator configured to produce the electrical generator power from the mechanical engine power,
the welding-type power supply further comprising an energy storage device configured to store electrical energy, and
the control circuitry being further configured to:
identify a noise threshold,
estimate a power threshold based on the noise threshold,
control the engine such that the mechanical engine power output by the engine remains below the power threshold, or the electrical generator power produced by the generator remains below the power threshold,
identify a power demand,
control the power conversion circuitry to use the electrical generator power produced by the generator as a first portion of the input power to meet a portion of the power demand, and
control the power conversion circuitry to use the electrical energy stored by the energy storage device as a second portion of the input power to meet a remaining portion of the power demand.

12. A welding-type power supply, comprising:
an engine configured to output mechanical power;
a generator configured to produce electrical power from the mechanical power output by the engine;
power conversion circuitry configured to convert input power to welding-type output power suitable for use by a welding-type tool during a welding-type operation, the power conversion circuitry being configured to use the electrical power produced by the generator as the input power;
control circuitry configured to estimate a noise level of the welding-type power supply or the noise generating device based on sound sensor data captured by a sound sensor, a first amount of the mechanical power output by the engine, or a second amount of the electrical power produced by the generator; and
a user interface configured to output an indication of the noise level.

13. The welding-type power supply of claim 12, further comprising a hydraulic pump, or an air compressor, the control circuitry being configured to estimate the noise level based on (i) the first amount of the mechanical power output by the engine, or a second amount of the electrical power produced by the generator, and (ii) a third amount of hydraulic fluid output by the hydraulic pump, or a fourth amount of compressed air output by the air compressor.

14. The welding-type power supply of claim 12, further comprising memory circuitry storing one or more associations between a plurality of output amounts and one or more different noise levels, the control circuitry being configured to estimate the noise level based on (i) the one or more associations and (ii) the first amount of the mechanical power output by the engine, or the second amount of the electrical power produced by the generator.

15. The welding-type power supply of claim 12, wherein the control circuitry is further configured to:
identify a noise threshold,
determine whether the noise level exceeds the noise threshold, and
in response to determining the noise level exceeds the noise threshold:
output a notification via the user interface,
control the engine to reduce the mechanical power output by the engine, or
disable the welding-type power supply or
wherein the control circuitry is further configured to:
identify a noise threshold,
identify a power demand based on a power supply setting,
estimate a future noise level that will be produced by the welding-type power supply based on the power demand,
determine whether the future noise level exceeds the noise threshold, and
in response to determining the future noise level exceeds the noise threshold, output a notification, or recommend a different power supply setting, via the user interface or wherein the welding-type power supply further comprises an energy storage device configured to store electrical energy, the control circuitry being further configured to:
identify a noise threshold,
estimate a power threshold based on the noise threshold,
control the engine such that the mechanical power output by the engine remains below the power threshold, or the electrical power produced by the generator remains below the power threshold,
identify a power demand,
control the power conversion circuitry to use the electrical power produced by the generator as a first portion of the input power to meet a portion of the power demand, and
control the power conversion circuitry to use the electrical energy stored by the energy storage device as a second portion of the input power to meet a remaining portion of the power demand.
